# EUROPÄISCHE PATENTSCHRIFT

(11) **EP 2 989 298 B1**
(45) Veröffentlichungstag und Bekanntmachung des Hinweises auf die Patenterteilung: **02.11.2016**
(21) Anmeldenummer: 14715601.2
(22) Anmeldetag: 07.04.2014
(51) Int. Cl.: F01D 17/14

(54) **ABGASTURBOLADER**
EXHAUST GAS TURBOCHARGER
TURBOCOMPRESSEUR À GAZ D'ÉCHAPPEMENT

(30) Priorität: 22.04.2013 DE 102013006928
(43) Veröffentlichungstag der Anmeldung: 02.03.2016
(73) Patentinhaber: Volkswagen Aktiengesellschaft, 38440 Wolfsburg (DE)
(72) Erfinder: ALBERTI, Peter, 38553 Wasbüttel (DE); HINRICHS, Oliver, 31226 Peine (DE); KAMMEYER, Jasper, 30169 Hannover (DE); GREINER, Michael, 39116 Magdeburg (DE)
(86) Internationale Anmeldenummer: PCT/EP2014/056910
(87) Internationale Veröffentlichungsnummer: WO 2014/173668

(56) Entgegenhaltungen:
- WO-A1-2006/105804
- DE-A1-102008 049 782
- DE-A1-102010 000 222
- DE-A1-102011 113 432

## Beschreibung

Die Erfindung betrifft einen Abgasturbolader für eine Brennkraftmaschine, insbesondere Diesel-Brennkraftmaschine.

Die Verwendung eines oder mehrerer Abgasturbolader zur Erhöhung der spezifischen Leistung und zur Senkung des spezifischen Kraftstoffverbrauchs von Brennkraftmaschinen ist bekannt.

Abgasturbolader weisen eine in einen Abgasstrang der Brennkraftmaschine integrierte Turbine mit einem Turbinenlaufrad sowie einen in den Frischgasstrang integrierten Verdichter mit einem Verdichterlaufrad auf. Das Turbinenlaufrad und das Verdichterlaufrad sind über eine Welle verbunden. Im Betrieb der Brennkraftmaschine wird das Turbinenlaufrad von der Abgasströmung angeströmt und dadurch rotierend angetrieben, wobei diese Rotation über die Welle auf das Verdichterlaufrad übertragen wird. Die so bewirkte Rotation des Verdichterlaufrads erzeugt die gewünschte Verdichtung des Frischgases.

Sowohl die Turbine als auch der Verdichter eines Abgasturboladers weisen einen von dem Massenstrom des durch sie hindurch strömenden Gases abhängigen Wirkungsgrad auf. Die Geometrie der strömungsführenden Räume und im besonderen Maße die Geometrie der Laufräder muss so ausgelegt werden, dass ein ausreichend guter Wirkungsgrad über den gesamten Bereich des Massenstroms, der die Turbine bzw. den Verdichter im Betrieb der Brennkraftmaschine durchströmt, erreicht wird. Gleichzeitig wird versucht, in einem oder mehreren kleineren Betriebsbereichen des Verbrennungsmotors der Brennkraftmaschine den höchstmöglichen Wirkungsgrad für die Turbine und den Verdichter zu erzielen. Bei Diesel-Brennkraftmaschinen ist typischerweise vorgesehen, im Teillastbetrieb des Verbrennungsmotors einen möglichst hohen Wirkungsgrad des Abgasturboladers zu erreichen.

Eine Möglichkeit, den Wirkungsgrad und damit auch das Ansprechverhalten eines Abgasturboladers zu verbessern, kann darin bestehen, zwei oder mehr Abgasturbolader (ggf. auch mechanisch oder elektrisch angetriebene Verdichter) bei einer Brennkraftmaschine vorzusehen, wobei diese für unterschiedliche Betriebsbereiche eines Verbrennungsmotors der Brennkraftmaschine ausgelegt und auch nur oder primär in diesen Betriebsbereichen für die Verdichtung des Frischgases verantwortlich sind.

Auch ist die Verwendung sogenannter Abgasturbolader mit variabler Turbinengeometrie (VTG) verbreitet, bei der verstellbare Leitschaufeln eingangsseitig der Turbine angeordnet sind. Durch eine angepasste Verstellung der Leitschaufeln wird zum einen der freie Strömungsquerschnitt im Eintrittskanal der Turbine verändert, wodurch insbesondere bei niedrigen Abgasmassenströmen die Strömungsgeschwindigkeit beim Eintritt in den das Turbinenlaufrad aufnehmenden Laufradraum erhöht werden kann. Zum anderen kann die Richtung der Anströmung der Schaufeln des Turbinenlaufrads angepasst werden, was ebenfalls eine Erhöhung des Turbinenwirkungsgrads bringen kann.

Bei den meisten Abgasturboladern kommen Radialturbinen zum Einsatz, bei denen das Turbinenlaufrad radial angeströmt und axial abgeströmt wird. VTG-Ausführungen von Radialturbinen sehen regelmäßig vor, die verstellbaren Leitschaufeln ringförmig in einem das Laufrad umgebenden Einlasskanal der Turbine anzuordnen, wobei die Verstellung durch ein Verdrehen eines mit allen Leitschaufeln verbundenen Verstellrings erfolgt.

In der DE 102 47 216 A1 ist eine dazu alternative Ausgestaltung eines VTG-Abgasturboladers bekannt, der den vermeintlich großen Aufwand der ringförmig angeordneten, verstellbaren Leitschaufeln vermeiden soll. Dort sind eintrittsseitig der Turbine eine oder mehrere gerade Leitschaufeln angeordnet, die den Eintrittskanal diagonal oder sehnenförmig durchlaufen, einen sich über ihrer Länge verändernden Querschnitt aufweisen und mittels einer Verstellvorrichtung axial verschiebbar sind. Dadurch können in Abhängigkeit von dem Betriebspunkt, in dem der Verbrennungsmotor betrieben wird, Abschnitte der Leitschaufeln mit unterschiedlichen Querschnitten innerhalb des Eintrittskanals platziert werden.

In der DE 102 47 216 A1 ist zudem offenbart, dass eine solche verstellbare Leitschaufelanordnung alternativ oder zusätzlich auch austrittsseitig der Turbine vorgesehen werden kann. Dadurch soll die Strömungscharakteristik der aus der Turbine austretenden Abgasströmung beeinflusst werden.

Weiterhin ist aus der DE 196 15 237 A1 ein Abgasturbolader bekannt, dessen Turbine sowohl einen radialen als auch einen halbaxialen Eintrittskanal ausbildet. In sowohl dem radialen als auch dem halbaxialen Eintrittskanal sind Leitschaufeln vorgesehen, die jedoch nicht hinsichtlich des freigegeben Strömungsquerschnitts und/oder des Anströmwinkels für das Turbinenlaufrad verstellbar ausgebildet sind. Vorgesehen ist, einen der Eintrittskanäle bedarfsweise bis hin zu einem Verschließen zu verkleinern, um den Turbinenwirkungsgrad bei niedrigen Abgasmassenströmen zu verbessern.

Die WO 2006/105804 A1 offenbart einen Abgasturbolader mit einer Turbine, wobei die Turbine ein Turbinengehäuse aufweist, das stromauf eines Turbinenlaufrads einen Eintrittskanal und stromab des Turbinenlaufrads einen Austrittskanal ausbildet. Außerdem ist ein bewegliches Wandbauteil offenbart, wobei die Position des Wandbauteils einstellbar ist, um einen Durchmesser der Turbine an einer Auslassseite der Turbine freizulegen. Dadurch wird die Fläche und somit die Strömungskapazität der Turbine an dem Auslassdurchgang erhöht.

Die Schriften DE 10 2010 000 222 A1, DE 10 2008 049 782 A1 und DE 10 2011 113 432 A1 offenbaren ebenfalls Querschnittsflächen im Austrittskanal einer Turbine eines Abgasturboladers, welche mittels Einstellvorrichtungen veränderbar sind.

Schließlich ist für Verdichter von Abgasturboladern die Verwendung eines sogenannten Trimstellers bekannt, der der Verschiebung der Pumpgrenze eines Verdichterkennfelds in Richtung niedriger Massenströme bei hohen Druckverhältnissen dient. Gleichzeitig kann ein Trimsteller im Bereich der Pumpgrenze einen Anstieg des Verdichterwirkungsgrads bewirken. Hierzu umfasst ein Trimsteller eine Vorrichtung, durch die der Anströmquerschnitt, in dem das Laufrad des Verdichters angeströmt wird, veränderbar ist. Durch die so erreichte Düsenwirkung des Trimstellers kann mit zunehmendem Regeleingriff (Verkleinerung des Anströmquerschnitts) die Verdichteranströmung stärker auf den nabennahen Strömungsquerschnitt des Verdichterlaufrads fokussiert werden. Dadurch strömt weniger Fluid in den impulsarmen und verlustbehafteten Bereich der Rückströmblase und die Kernströmung im nabennahen Bereich wird beschleunigt und dadurch zusätzlich stabilisiert. Die Beschleunigung der Strömung im nabennahen Bereich des Verdichters hat zusätzlich eine saugseitige Verschiebung der Verdichteranströmung zur Folge, was zu einer weiteren Stabilisierung der Strömung beitragen kann. Die Stabilisierung der Kernströmung führt zu der gewünschten Verschiebung der Pumpgrenze des Verdichterkennfelds zu geringeren Massenströmen des Frischgases. Bei nicht gewünschtem Regeleingriff (Trimsteller vollständig geöffnet) wird möglichst der gesamte Querschnitt des Frischgasstrangs vor dem Verdichter freigegeben, so dass in der Verdichteranströmung möglichst keine zusätzlichen Reibungs- oder Drosselverluste entstehen. Der Verdichterwirkungsgrad und die Breite des Verdichterkennfelds werden deshalb in Richtung der Stopfgrenze nicht wesentlich negativ durch den Trimsteller beeinflusst. Ein Abgasturbolader mit einem Trimsteller für den Verdichter ist beispielsweise aus der DE 10 2010 026 176 A1 bekannt.

Ausgehend von diesem Stand der Technik liegt der Erfindung die Aufgabe zugrunde, einen hinsichtlich des Wirkungsgrads verbesserten Abgasturbolader für eine Brennkraftmaschine zu schaffen.

Diese Aufgabe wird durch eine Brennkraftmaschine gemäß dem Patentanspruch 1 gelöst. Vorteilhafte Ausgestaltungen davon sind Gegenstand der weiteren Patentansprüche und ergeben sich aus der nachfolgenden Beschreibung der Erfindung.

Der Erfindung liegt die Erkenntnis zugrunde, dass bei Unterschall-Strömungsgeschwindigkeiten, wie sie in einem Abgasturbolader herrschen, mittels Strömungsbeeinflussungsmitteln eine Beeinflussung der Strömung auch stromauf ihrer Anordnung erreicht werden kann. Demnach kann die Strömung in einem das Turbinenlaufrad aufnehmenden Laufradraum auch durch Strömungsbeeinflussungsmittel erreicht werden, die austrittsseitig der Turbine angeordnet ist.

Ein gattungsgemäßer Abgasturbolader mit einer Turbine, die ein Turbinengehäuse aufweist, das stromauf eines Turbinenlaufrads einen Eintrittskanal und stromab einen Austrittskanal ausbildet, ist dadurch weitergebildet, dass der Strömungsquerschnitt in zumindest einem Abschnitt des Austrittkanals mittels einer (vorzugsweise in Richtung der Strömungsrichtung unbeweglich angeordneten) Einstellvorrichtung veränderbar ist.

Durch die die Querschnittsfläche verändernde Einstellvorrichtung kann der Wirkungsgrad der Turbine und damit des gesamten Abgasturboladers verbessert werden, wobei im Vergleich zu konventionell ausgelegten Abgasturboladern insbesondere eine Wirkungsgradsteigerung bei relativ niedrigen Lasten eines mit dem erfindungsgemäßen Abgasturbolader zusammenwirkenden Verbrennungsmotors einer Brennkraftmaschine erzielt werden kann. Ein wesentlicher Vorteil der Positionierung der Einstellvorrichtung austrittsseitig der Turbine liegt darin, dass eintrittsseitig dafür kein Platz beansprucht wird, so dass eine vorteilhafte, weil mit wenig Aufwand verbundene Integration in einen VTG-Abgasturbolader, bei dem in dem Eintrittskanal eine oder mehrere verstellbare Leitschaufeln angeordnet sind, möglich ist.

Erfindungsgemäß ist die Einstellvorrichtung des Abgasturboladers als sogenannter Trimsteller ausgebildet, wobei dieser ein innerhalb des Austrittskanals angeordnetes, trichterförmiges Wandsystem aufweist und wobei ein Ein- oder Austrittsquerschnitt des Wandsystems durch ein mehr oder weniger erfolgendes Spreizen des Wandsystems veränderbar ist. Auf diese Weise kann in konstruktiv einfacher und strömungstechnisch günstiger Weise eine Veränderbarkeit des Strömungsquerschnitts erreicht werden.

Vorzugsweise ist dabei vorgesehen, dass der Eintrittsquerschnitt des Wandsystems veränderbar ist. Dadurch kann der veränderbare Strömungsquerschnitt möglichst nah an die Austrittseite des Turbinenlaufrads angeordnet werden, was sich positiv auf die Beeinflussung des Turbinenwirkungsgrads auswirken kann.

Weiterhin bevorzugt kann vorgesehen sein, dass sich das trichterförmige Wandsystem in Strömungsrichtung des Abgases aufweitet, was strömungstechnische Vorteile bringen kann.

In einer konstruktiv vorteilhaften Ausgestaltung des erfindungsgemäßen Abgasturboladers kann vorgesehen sein, dass das Wandsystem eine Mehrzahl erster Wandelemente aufweist, die in Umfangsrichtung beabstandet voneinander ringförmig angeordnet sind, und eine Mehrzahl zweiter Wandelemente aufweist, die in Umfangsrichtung beabstandet voneinander ringförmig angeordnet sind, wobei die zweiten Wandelemente die Abstände zwischen den ersten Wandelementen (und die ersten Wandelemente die Abstände zwischen den zweiten Wandelementen) überdecken und dass die Einstellvorrichtung eine (z.B. elektrisch, pneumatisch oder hydraulisch betätigte) Verstellvorrichtung aufweist, mittels der erste, den Ein- oder Austrittsquerschnitt ausbildende Enden der ersten Wandelemente und/oder der zweiten Wandelemente in radialer Richtung verschiebbar sind.

Die Verstellvorrichtung kann ein Positionserkennnungsmittel aufweisen, die die jeweilige Stellung des Wandsystems an eine Regelelektronik (z.B. Motorsteuerung) einer den Abgasturbolader umfassenden Brennkraftmaschine rückmelden kann, um eine zielgerichtete Einstellung der Einstellvorrichtung an den Betriebspunkt eines Verbrennungsmotors der Brennkraftmaschine einzustellen.

Weiterhin bevorzugt kann vorgesehen sein, dass zumindest einige der Wandelemente drehbar gelagert sind. Auf diese Weise kann in konstruktiv einfacher Weise ein verstellbares, trichterförmiges Wandsystem geschaffen werden, das ohne den Einsatz von hochelastischen Werkstoffen, wie z.B. Elastomeren, auskommen kann. Die Wandelemente können somit vorteilhafterweise aus Werkstoffen mit relativ hohen Elastizitätsmodulen und insbesondere Metall(en) (z.B. Stahl) ausgebildet sein. Gleichzeitig kann die radiale Verschiebung der ersten Enden der entsprechenden Wandelemente mit relativ geringen Kräften realisiert werden.

Die Wandelemente können aber (zumindest teilweise) auch an oder in der Nähe Ihrer zweiten Enden fest eingespannt sein, wobei die Winkelveränderung infolge einer radialen Verschiebung der ersten Enden durch eine elastische Deformation der Wandelemente aufgenommen wird. Da die Verformung hierbei vergleichsweise klein sein kann, kann dies auch bei Wandelementen aus z.B. Metall(en) realisiert werden, sofern diese ausreichend dünn dimensioniert werden können. Dadurch kann gegebenenfalls auf ein zusätzliches Federelement zur Beaufschlagung des Wandsystems in seine geöffnete Stellung verzichtet werden.

Sofern die Wandelemente drehbar gelagert sind, kann eine wippenartige Lagerung von zumindest einigen der Wandelemente besonders vorteilhaft sein. Bei dieser führt eine radial nach innen gerichtete Verschiebung der ersten Enden zu einer radial nach außen gerichteten Verschiebung der zweiten Enden dieser Wandelemente. Diese Verschiebung der zweiten Enden kann insbesondere mit einer elastischen Vorspannung (mindestens) eines Federelements verbunden sein, wodurch eine federbelastete Beaufschlagung des Wandsystems, insbesondere in die aufgeweitete Stellung erreicht werden kann. Dies ermöglicht die Verwendung einer lediglich einseitig wirkenden Verstellvorrichtung.

Vorzugsweise kann vorgesehen sein, dass die Wandelemente einen U-förmigen Querschnitt aufweisen, wobei die Enden der freien Schenkel jedes ersten Wandelements auf jeweils einem zweiten Wandelement (und andersherum) aufliegen. Dadurch kann der Widerstand für die gleitende Relativbewegung zwischen den ersten Wandelementen und den zweiten Wandelementen klein gehalten werden. Zudem kann dadurch die maximale Aufspreizung des Wandsystems begrenzt werden.

Eine bevorzugte, weil konstruktiv einfache Ausgestaltung der Verstellvorrichtung kann einen Verstellring mit einer oder mehreren Führungsschlitzen umfassen, wobei die ersten und/oder zweiten Wandelemente derart in den Führungsschlitzen geführt sind, dass ein Verdrehen des Verstellrings zu einer radialen Verschiebung der ersten Enden der ersten und/oder zweiten Wandelemente führt.

Die Verstelleinrichtung eines erfindungsgemäßen Abgasturboladers kann auch (mindestens) eine Lamellenblende umfassen, bei der ringförmig angeordnete, parallel benachbart angeordnete Lamellen in einer zumindest eine radiale Komponente aufweisenden Bewegung mehr oder weniger ineinander geschoben werden und dadurch den mittig zwischen diesen gelegen Strömungsquerschnitt mehr oder weniger freigeben. Die Lamellenblende kann alternativ oder zusätzlich zu einem Trimsteller eingesetzt werden.

Bei einer Kombination einer Lamellenblende mit einem Trimmsteller, bei dem insbesondere der Eintrittsquerschnitt durch eine Verstellung des Wandsystems veränderbar ist, kann die Lamellenblende auch dazu genutzt werden, den hinsichtlich seiner Breite variablen Ringraum zwischen dem Wandsystem und der Wand des Austrittskanals angepasst abzudecken, wodurch die Abgasströmung strömungsgünstig durch das Wandsystem geführt werden kann.

Die vorliegende Erfindung wird nachfolgend anhand von in den Zeichnungen dargestellten Ausführungsbeispielen näher erläutert. In den Zeichnungen zeigt:
- Fig. 1:: eine schematische Darstellung einer ersten Ausführungsform einer Turbine eines erfindungsgemäßen Abgasturboladers in einem Längsschnitt;
- Fig. 2:: einen Querschnitt durch die Turbine entlang der Ebene II - II in der Fig. 1 bei weitgehend geschlossenem Wandsystem;
- Fig. 3:: einen Querschnitt durch die Turbine entlang der Ebene II - II in der Fig. 1 bei weitgehend geöffnetem Wandsystem;
- Fig. 4:: das geöffnete Wandsystem der Turbine gemäß der Fig. 1 in einer ersten, detaillierten, perspektivischen Ansicht;
- Fig. 5:: das geöffnete Wandsystem der Turbine gemäß der Fig. 1 in einer zweiten, detaillierten, perspektivischen Ansicht;
- Fig. 6:: eine schematische Darstellung einer zweiten Ausführungsform einer Turbine eines erfindungsgemäßen Abgasturboladers in einem Längsschnitt;
- Fig. 7:: einen Querschnitt durch die Turbine entlang der Ebene VII - VII in der Fig. 6; und
- Fig. 8:: Verläufe des Turbinenwirkungsgrads über dem Abgasmassenstrom bei einem erfindungsgemäßen Abgasturbolader.

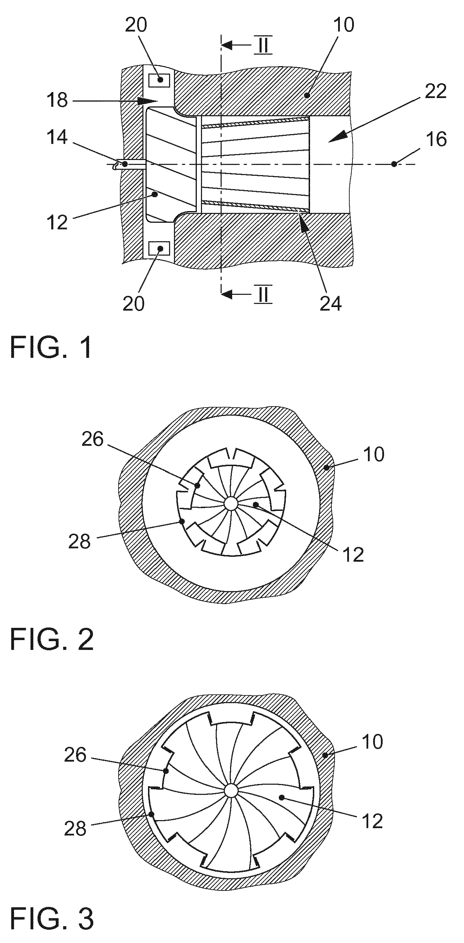

Die Fig. 1 zeigt in einer stark vereinfachten Darstellung einen Abschnitt einer Turbine eines erfindungsgemäßen Abgasturboladers in einem Längsschnitt.

Die Turbine weist ein Turbinengehäuse 10 auf, das einen Laufradraum ausbildet, in dem ein (Turbinen-)Laufrad 12 drehbar gelagert angeordnet ist. Das Laufrad 12 ist mit einer Welle 14 verbunden, die zudem mit dem (Verdichter-)Laufrad eines nicht dargestellten Verdichters des Abgasturboladers verbunden ist.

Das Turbinengehäuse 10 bildet weiterhin einen radial (bezüglich einer Rotationsachse 16 des Laufrads 12) in den Laufradraum mündenden, ringförmigen Eintrittskanal 18 aus, in dem in ringförmiger Anordnung eine Mehrzahl von verstellbaren Leitschaufeln 20 angeordnet sind. Bei dem Abgasturbolader handelt es sich demnach um einen sogenannten VTG-Abgasturbolader.

Weiterhin bildet das Turbinengehäuse 10 einen Austrittskanal 22 aus, der stromab des Laufrads 12 in axialer Richtung (bezüglich der Rotationsachse 16 des Laufrads 12) in den Laufradraum mündet bzw. aus diesem abgeht.

Innerhalb des Austrittskanals 22 ist eine Einstellvorrichtung 24 in Form eines Trimstellers angeordnet. Diese umfasst ein trichterförmiges Wandsystem, das sich in Strömungsrichtung aufweitet und bezüglich des von dem Eintrittsquerschnitt freigegebenen Strömungsquerschnitts veränderbar ist.

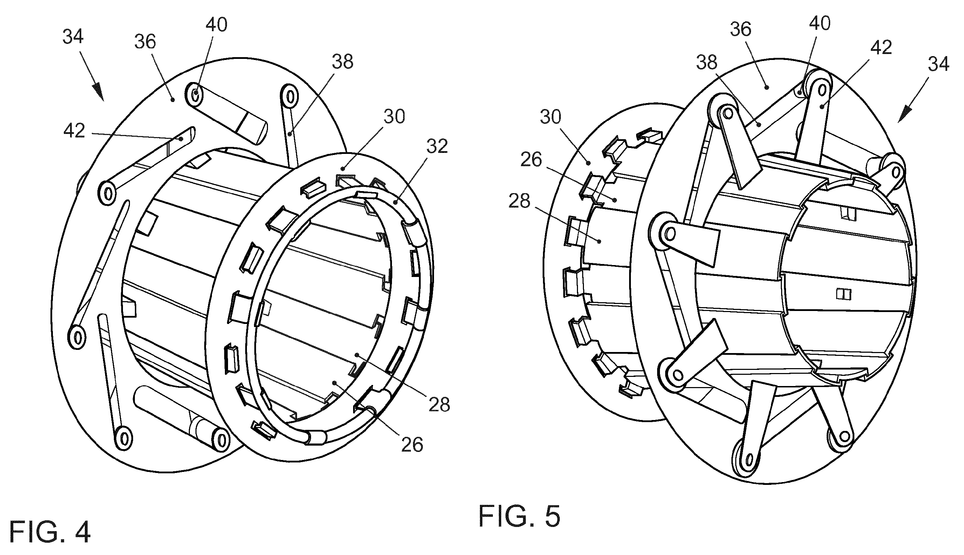

Das Wandsystem kann so ausgebildet sein, wie dies in den Fig. 4 und 5 dargestellt ist. Demnach umfasst dieses eine Mehrzahl von länglichen, sich in Umfangsrichtung bogenförmig erstreckenden Wandelementen 26, 28. Die Wandelemente 26, 28 sind in zwei koaxialen, kreisringförmigen Schichten angeordnet und weisen einen U-förmigen Querschnitt auf, d.h. diese umfassen jeweils neben einem im Querschnitt bogenförmigen Grundabschnitt noch zwei sich davon ca. in einem rechten Winkel erstreckende Schenkel, wobei die Schenkel der (ersten) Wandelemente 26 der ersten, innen liegenden Schicht radial nach außen gerichtet sind, während die Schenkel der (zweiten) Wandelemente 28 der zweiten, außen liegenden Schicht radial nach innen gerichtet sind. Die Wandelemente 26, 28 jeder der zwei Schichten sind zudem beabstandet zueinander angeordnet, wobei ein rotatorischer Versatz zwischen den beiden Schichten vorgesehen ist, so dass die Wandelemente 26, 28 jeder Schicht die Zwischenräume der jeweils anderen Schicht überdecken. Dadurch ergibt sich ein im Wesentlichen geschlossenes, trichterförmiges Wandsystem. Die Wandelemente 26, 28 der beiden Schichten kontaktieren sich über die vergleichsweise kleinflächigen Endflächen der Schenkel, wodurch ein relativ widerstandsarmes Gleiten der Wandelemente 26, 28 aufeinander erreicht werden kann. Zudem bilden die Schenkel der Wandelemente 26, 28 Endanschläge aus, die ein Aufspreizen des Wandsystems begrenzen.

Die stromabwärtigen Enden der Wandelemente 26, 28 sind dreh- bzw. verschwenkbar gelagert, so dass eine sich durch das radiale Verschieben der stromaufwärtigen Enden einstellende Winkelveränderung nicht mittels einer Deformation der Wandelemente 26, 28 ausgeglichen werden muss. Als Lagerelement für die drehbare bzw. wippenartige Lagerung dient ein Lagerring 30, der eine der Anzahl an Wandelementen 26, 28 entsprechende Anzahl an schlitzförmigen Öffnungen aufweist, durch die sich schmale Endabschnitte der Wandelemente 26, 28 erstrecken. Mittels eines Federrings 32, z.B. aus einem Elastomer, wird das Wandsystem in seine vollständig geöffnete Stellung (vgl. Fig. 3 bis 5) beaufschlagt. Der Federring 32 wird von den Endabschnitten jedes der ersten Wandelemente 26 ca. halbkreisförmig umgriffen. Infolge der wippenartigen Lagerung der Wandelemente 26, 28 in dem Lagerring 30 führt ein nach innen gerichtetes, radiales Verschieben der freien Enden der Wandelemente 26, 28 zu einem nach außen gerichteten, radialen Verschieben der Endabschnitte und damit zu einer elastischen Umfangsvergrößerung in Verbindung mit einer (zunehmenden) elastischen Vorspannung des Federrings 32.

Ein mehr oder weniger erfolgendes Spreizen des auch im vollständig geöffneten Zustand trichterförmigen Wandsystems, d.h. ein radiales Verschieben der freien, stromaufwärtigen Enden der Wandelemente 26, 28 erfolgt mittels einer Verstellvorrichtung 34. Diese umfasst einen Verstellring 36, der eine der Anzahl an zweiten Wandelementen 28 entsprechende Anzahl an schräg verlaufenden Führungsschlitzen 38 aufweist. In jedem der Führungsschlitze 38 ist ein Führungsbolzen 40 verschiebbar gelagert. Die Führungsbolzen 40 sind über jeweils einen Befestigungsarm 42 mit einem der zweiten Wandelemente 28 verbunden. Infolge der schrägen Ausrichtung der Führungsschlitze 38 führt ein Verdrehen des Verstellrings 36 zu einer radialen Verschiebung der Führungsbolzen 40 und damit der zweiten Wandelemente 28. Die zweiten Wandelemente 28 nehmen bei einem radialen Verschieben nach innen die ersten Wandelemente 26 mit. Bei einem radialen Verschieben nach außen sorgt dagegen die Beaufschlagung mittels des Federrings 32 dafür, dass die ersten Wandelemente 26 der Bewegung der zweiten Wandelemente 28 folgen.

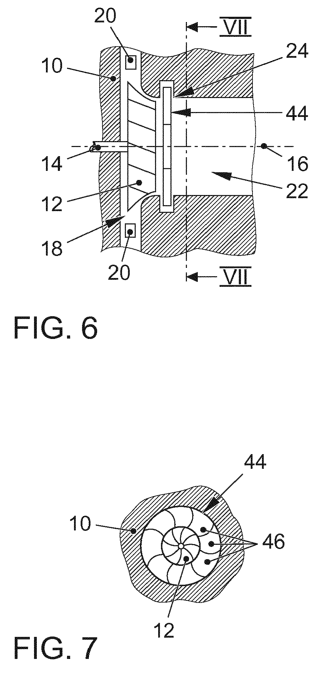

Die Fig. 6 und 7 zeigen eine alternative Ausführungsform einer Einstellvorrichtung 24 einer Turbine eines erfindungsgemäßen Abgasturboladers. Die Einstellvorrichtung 24 umfasst eine Lamellenblende 44. Diese umfasst eine Mehrzahl von ringförmig angeordneten, sich teilweise überdeckenden Lamellen 46. Die Lamellen 46 können mittels einer nicht dargestellten Verstellvorrichtung in einer zumindest eine radiale Komponente aufweisenden Bewegung verschoben werden, so dass diese mehr oder weniger in den Austrittskanal 22 eintauchen, wobei sie, unter variierender gegenseitiger Überdeckung einen mehr oder weniger großen Strömungsquerschnitt freigeben.

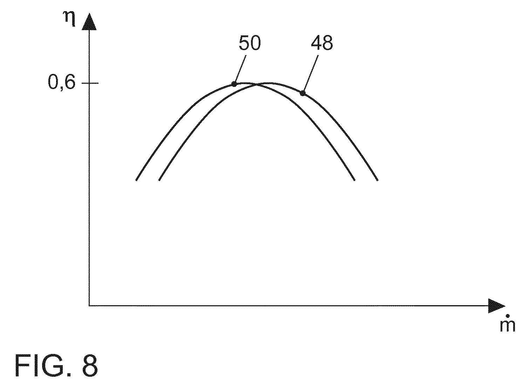

Die Fig. 8 verdeutlicht die Verbesserung des Turbinenwirkungsgrads durch die erfindungsgemäße Anordnung einer Einstellvorrichtung 24 im Austrittskanal 22 einer Turbine eines VTG-Abgasturboladers. In einem Diagramm ist dort, für zwei verschiedene, von der Einstellvorrichtung 24 freigegebene Strömungsquerschnitte im Austrittskanal 22, der Verlauf des Turbinenwirkungsgrads η über dem Abgasmassenstrom m durch die Turbine, in weiterer Abhängigkeit von der Stellung der verstellbaren (VTG-)Leitschaufeln 20 dargestellt. Dabei öffnen die Leitschaufeln 20 mit zunehmendem Abgasmassenstrom m, d.h. je größer der Abgasmassenstrom m desto größer ist der von den Leitschaufeln 20 freigegebene Strömungsquerschnitt. Am jeweiligen linken Ende sind die Leitschaufeln 20 so weit wie möglich geschlossen; am jeweiligen rechten Ende der Kurven so weit wie möglich geöffnet. Die beiden Kurven weisen einen im Wesentlichen identischen, glockenförmigen Verlauf auf. Diese sind jedoch in horizontaler Richtung zueinander versetzt. Dabei stellt die rechte Kurve 48 den Verlauf des Turbinenwirkungsgrads η bei relativ großem Strömungsquerschnitt (90% des maximalen Strömungsquerschnitts) im Austrittskanal 22 und die linke Kurve 50 bei relativ kleinem Strömungsquerschnitt (85% des maximalen Strömungsquerschnitts) im Austrittskanal 22 dar.

Durch die erfindungsgemäße Veränderung des Strömungsquerschnitts im Austrittskanal 22 der Turbine kann demnach die den Turbinenwirkungsgrad η darstellende Kurve verschoben und somit an den tatsächlich auftretenden Abgasmassenstrom ṁ angepasst werden. Dadurch ergibt sich für jeden Abgasmassenstrom m, der im Betrieb einer einen erfindungsgemäßen Abgasturbolader umfassenden Brennkraftmaschine auftritt, ein möglichst hoher Turbinenwirkungsgrad η. Gegenüber einem konventionellen VTG-Abgasturbolader, dessen Kurve durch Auslegung festgelegt wurde und der somit nur für einen konkreten Abgasmassenstrom ein Wirkungsgradmaximum aufweist, kann somit für alle von diesem konkreten Abgasmassenstrom abweichende Abgasmassenströme ein erhöhter Turbinenwirkungsgrad erzielt werden. Dies führt zu einer Erhöhung des Gesamtwirkungsgrad, der über den gesamten Bereich des im Betrieb auftretenden Abgasmassenstroms bestimmt wird.

### Bezugszeichenliste

- 10: Turbinengehäuse
- 12: Laufrad
- 14: Welle
- 16: Rotationsachse
- 18: Eintrittskanal
- 20: Leitschaufeln
- 22: Austrittskanal
- 24: Einstellvorrichtung
- 26: erstes Wandelement
- 28: zweites Wandelement
- 30: Lagerring
- 32: Federring
- 34: Verstellvorrichtung
- 36: Verstellring
- 38: Führungsschlitz
- 40: Führungsbolzen
- 42: Befestigungsarm
- 44: Lamellenblende
- 46: Lamelle
- 48: Verlauf des Turbinenwirkungsgrads η über dem Abgasmassenstrom m bei 90%iger Öffnung des Strömungsquerschnitts im Austrittskanal
- 50: Verlauf des Turbinenwirkungsgrads η über dem Abgasmassenstrom m bei 85%iger Öffnung des Strömungsquerschnitts im Austrittskanal

## Patentansprüche

1. Abgasturbolader mit einer Turbine, wobei die Turbine ein Turbinengehäuse (10) aufweist, das stromauf eines Turbinenlaufrads (12) einen Eintrittskanal (18) und stromab des Turbinenlaufrads (12) einen Austrittskanal (22) ausbildet, wobei die Querschnittsfläche im Austrittskanal (22) mittels einer Einstellvorrichtung (24) veränderbar ist, **dadurch gekennzeichnet, dass** die Einstellvorrichtung (24) ein innerhalb des Austrittkanals (22) angeordnetes, trichterförmiges Wandsystem aufweist, wobei ein Ein- oder Austrittsquerschnitt des Wandsystems durch ein mehr oder weniger erfolgendes Spreizen des Wandsystems veränderbar ist.

2. Abgasturbolader gemäß Anspruch 1, **dadurch gekennzeichnet, dass** in dem Eintrittskanal (18) eine oder mehrere verstellbare Leitschaufeln (20) angeordnet sind.

3. Abgasturbolader gemäß Anspruch 1 oder 2, **dadurch gekennzeichnet, dass** sich das trichterförmige Wandsystem in Strömungsrichtung des Abgases aufweitet.

4. Abgasturbolader gemäß einem der Ansprüche 1 bis 3, **dadurch gekennzeichnet, dass** der Eintrittsquerschnitt des Wandsystems durch ein mehr oder weniger erfolgendes Spreizen des Wandsystems veränderbar ist.

5. Abgasturbolader gemäß einem der Ansprüche 1 bis 4, **dadurch gekennzeichnet, dass** das Wandsystem eine Mehrzahl erster Wandelemente (26) aufweist, die in Umfangsrichtung beabstandet voneinander ringförmig angeordnet sind, und eine Mehrzahl zweiter Wandelemente (28) aufweist, die in Umfangsrichtung beabstandet voneinander ringförmig angeordnet sind, wobei die zweiten Wandelemente (28) die Abstände zwischen den ersten Wandelementen (26) überdecken und eine Verstellvorrichtung (34) vorgesehen ist, mittels der erste, den Ein- oder Austrittsquerschnitt ausbildende Enden der ersten Wandelemente (26) und/oder der zweiten Wandelemente (28) in radialer Richtung verschiebbar sind.

6. Abgasturbolader gemäß Anspruch 5, **dadurch gekennzeichnet, dass** die ersten und/oder zweiten Wandelemente (26, 28) drehbar gelagert sind.

7. Abgasturbolader gemäß Anspruch 6, **dadurch gekennzeichnet, dass** zumindest einige der ersten und/oder zweiten Wandelemente (26, 28) wippenartig gelagert sind, so dass bei einer radialen, nach innen gerichteten Verschiebung der ersten Enden dieser Wandelemente (26, 28) zweite Enden dieser Wandelemente (26, 28) radial nach außen verschoben werden, was mit einer elastischen Vorspannung eines Federelements verbunden ist.

8. Abgasturbolader gemäß einem der Ansprüche 5 bis 7, **dadurch gekennzeichnet, dass** die ersten und/oder zweiten Wandelemente (26, 28) einen U-förmigen Querschnitt aufweisen.

9. Abgasturbolader gemäß einem der Ansprüche 5 bis 8, **dadurch gekennzeichnet, dass** die Verstellvorrichtung (34) einen Verstellring (36) mit einem oder mehreren Führungsschlitzen (38) umfasst, wobei erste und/oder zweite Wandelemente (26, 28) derart in einem oder mehreren der Führungsschlitze (28) geführt sind, dass ein Verdrehen des Verstellrings (36) zu einer radialen Verschiebung dieser Wandelemente (26, 28) in radialer Richtung führt.

10. Abgasturbolader gemäß einem der vorhergehenden Ansprüche, **dadurch gekennzeichnet, dass** die Einstellvorrichtung (24) eine Lamellenblende (44) umfasst.

## Claims

1. Exhaust-gas turbocharger having a turbine, wherein the turbine has a turbine housing (10) which forms an inlet duct (18) upstream of a turbine impeller (12) and which forms an outlet duct (22) downstream of the turbine impeller (12), wherein the cross-sectional area in the outlet duct (22) is variable by way of a setting device (24), **characterized in that** the setting device (24) has a funnel-shaped wall system which is arranged within the outlet duct (22), wherein an inlet or outlet cross section of the wall system is variable by virtue of the wall system being spread to a greater or lesser extent.

2. Exhaust-gas turbocharger according to Claim 1, **characterized in that** one or more adjustable guide vanes (20) are arranged in the inlet duct (18).

3. Exhaust-gas turbocharger according to Claim 1 or 2, **characterized in that** the funnel-shaped wall system widens in the flow direction of the exhaust gas.

4. Exhaust-gas turbocharger according to one of Claims 1 to 3, **characterized in that** the inlet cross section of the wall system is variable by virtue of the wall system being spread to a greater or lesser extent.

5. Exhaust-gas turbocharger according to one of Claims 1 to 4, **characterized in that** the wall system has a multiplicity of first wall elements (26) arranged so as to be spaced apart from one another in ring-shaped fashion in a circumferential direction and has a multiplicity of second wall elements (28) arranged so as to be spaced apart from one another in ring-shaped fashion in the circumferential direction, wherein the second wall elements (28) cover the spacings between the first wall elements (26), and an adjustment device (34) is provided by way of which first ends, which form the inlet or outlet cross section, of the first wall elements (26) and/or of the second wall elements (28) are displaceable in a radial direction.

6. Exhaust-gas turbocharger according to Claim 5, **characterized in that** the first and/or second wall elements (26, 28) are rotatably mounted.

7. Exhaust-gas turbocharger according to Claim 6, **characterized in that** at least some of the first and/or second wall elements (26, 28) are mounted in rocker-like fashion, such that, in the event of a radial, inwardly directed displacement of the first ends of said wall elements (26, 28), second ends of said wall elements (26, 28) are displaced radially outward, this being associated with a spring element being elastically preloaded.

8. Exhaust-gas turbocharger according to one of Claims 5 to 7, **characterized in that** the first and/or second wall elements (26, 28) have a U-shaped cross section.

9. Exhaust-gas turbocharger according to one of Claims 5 to 8, **characterized in that** the adjustment device (34) comprises an adjustment ring (36) with one or more guide slots (38), wherein first and/or second wall elements (26, 28) are guided in one or more of the guide slots (28) such that a rotation of the adjustment ring (36) leads to a radial displacement of said wall elements (26, 28) in the radial direction.

10. Exhaust-gas turbocharger according to one of the preceding claims, **characterized in that** the setting device (24) comprises a lamellar aperture (44).

## Revendications

1. Turbocompresseur à gaz d'échappement comprenant une turbine, la turbine présentant un carter de turbine (10) qui, en amont d'une roue mobile de turbine (12), constitue un canal d'entrée (18) et en aval de la roue mobile de turbine (12), un canal de sortie (22), la surface en section transversale dans le canal de sortie (22) pouvant être modifiée au moyen d'un dispositif d'ajustement (24), **caractérisé en ce que** le dispositif d'ajustement (24) présente un système de paroi en forme d'entonnoir disposé à l'intérieur du canal de sortie (22), une section transversale d'entrée ou de sortie du système de paroi pouvant être modifiée par un écartement plus ou moins important du système de paroi.

2. Turbocompresseur à gaz d'échappement selon la revendication 1, **caractérisé en ce que** dans le canal d'entrée (18) sont disposées une ou plusieurs aubes directrices réglables (20).

3. Turbocompresseur à gaz d'échappement selon la revendication 1 ou 2, **caractérisé en ce que** le système de paroi en forme d'entonnoir s'élargit dans la direction d'écoulement du gaz d'échappement.

4. Turbocompresseur à gaz d'échappement selon l'une quelconque des revendications 1 à 3, **caractérisé en ce que** la section transversale d'entrée du système de paroi peut être modifiée par un écartement plus ou moins important du système de paroi.

5. Turbocompresseur à gaz d'échappement selon l'une quelconque des revendications 1 à 4, **caractérisé en ce que** le système de paroi présente une pluralité de premiers éléments de paroi (26) qui sont disposés sous forme annulaire de manière espacée les uns des autres dans la direction périphérique et présente une pluralité de deuxièmes éléments de paroi (28) qui sont disposés sous forme annulaire de manière espacée les uns des autres dans la direction périphérique, les deuxièmes éléments de paroi (28) recouvrant les espaces entre les premiers éléments de paroi (26) et un dispositif de réglage (34) étant prévu, au moyen duquel des premières extrémités constituant la section transversale d'entrée ou de sortie des premiers éléments de paroi (26) et/ou des deuxièmes éléments de paroi (28) peuvent être déplacées dans la direction radiale.

6. Turbocompresseur à gaz d'échappement selon la revendication 5, **caractérisé en ce que** les premiers et/ou les deuxièmes éléments de paroi (26, 28) sont supportés de manière rotative.

7. Turbocompresseur à gaz d'échappement selon la revendication 6, **caractérisé en ce qu'**au moins certains des premiers et/ou des deuxièmes éléments de paroi (26, 28) sont supportés à la manière d'une bascule de telle sorte que dans le cas d'un déplacement radial orienté vers l'intérieur des premières extrémités de ces éléments de paroi (26, 28), des deuxièmes extrémités de ces éléments de paroi (26, 28) soient déplacées radialement vers l'extérieur, ce qui s'associe avec une précontrainte élastique d'un élément de ressort.

8. Turbocompresseur à gaz d'échappement selon l'une quelconque des revendications 5 à 7, **caractérisé en ce que** les premiers et/ou les deuxièmes éléments de paroi (26, 28) présentent une section transversale en forme de U.

9. Turbocompresseur à gaz d'échappement selon l'une quelconque des revendications 5 à 8, **caractérisé en ce que** le dispositif de réglage (34) comprend une bague de réglage (36) avec une ou plusieurs fentes de guidage (38), des premiers et/ou deuxièmes éléments de paroi (26, 28) étant guidés dans une ou plusieurs des fentes de guidage (28) de telle sorte qu'une rotation de la bague de réglage (36) conduise à un déplacement radial de ces éléments de paroi (26, 28) dans la direction radiale.

10. Turbocompresseur à gaz d'échappement selon l'une quelconque des revendications précédentes, **caractérisé en ce que** le dispositif d'ajustement (24) comprend un diaphragme à lamelles (44).
